# EUROPEAN PATENT SPECIFICATION

(11) **EP 2 754 095 B1**
(45) Date of publication and mention of the grant of the patent: **14.06.2017**
(21) Application number: 11763587.0
(22) Date of filing: 07.09.2011
(51) Int. Cl.: G06K 9/32, B60S 1/08

(54) **METHOD AND CAMERA ASSEMBLY FOR DETECTING RAINDROPS ON A WINDSCREEN OF A VEHICLE**
VERFAHREN UND KAMERAANORDNUNG ZUR ERFASSUNG VON REGENTROPFEN AUF EINER WINDSCHUTZSCHEIBE EINES KRAFTFAHRZEUGS
PROCÉDÉ ET ENSEMBLE CAMÉRA POUR DÉTECTER DES GOUTTES DE PLUIE SUR UN PARE-BRISE D'UN VÉHICULE

(43) Date of publication of application: 16.07.2014
(73) Proprietor: Valeo Schalter und Sensoren GmbH, 74321 Bietigheim-Bissingen (DE)
(72) Inventor: AHIAD, Samia, 93250 Villemomble (FR); ROBERT-LANDRY, Caroline, F-75018 Paris (FR)
(86) International application number: PCT/EP2011/004507
(87) International publication number: WO 2013/034167

(56) References cited:
- EP-A1- 1 923 280
- WO-A2-03/029056
- US-A1- 2007 115 357

## Description

The invention relates to a method for detecting raindrops on a windscreen of a vehicle, in which at least one image is captured by a camera. Moreover, the invention relates to a camera assembly for detecting raindrops on a windscreen of a vehicle.

For motor vehicles, several driving assistance systems are known, which use images captured by a single or by several cameras. The images obtained can be processed to allow a display on screens, for example at the dashboard, or they may be projected on the windscreen, in particular to alert the driver in case of danger or simply to improve his visibility. The images can also be utilized to detect raindrops or fog on the windscreen of the vehicle. Such raindrop or fog detection can participate in the automatic triggering of a functional units of the vehicle. For example the driver can be alerted, a braking assistance system can be activated, windscreen wipers can be turned on and/or headlights can be switched on, if rain is detected. Such assistance systems are disclosed in the patent application publications WO 03/029056 A2, EP 1 923 280 A1 and US 2007/115357 A1. WO 03/029056 A2 discloses image-based raindrop identification, in which near field objects (e.g. raindrops) are distinguished from far field ones (e.g. vehicle lamps) by using edge detection and image frequency analysis. EP 1 923 280 A1 describes a multi-purpose bifocal sensor assembly for cameras to be placed on vehicles to achieve various tasks such as raindrop detection and road shape analysis. US 2007/115357 A1 discloses raindrop identification based on brightness, with gradient or shape based verification of potential raindrops. Raindrop detection on a windscreen of a vehicle based on an image captured by a camera may encounter some difficulties due to a misinterpretation of objects extracted from the image captured by the camera as raindrops.

It is therefore the object of the present invention to create a method and a camera assembly for detecting raindrops on a windscreen of a vehicle, which is particularly reliable.

This object is met by a method with the features of claim 1 and by a camera assembly with the features of claim 9. Advantageous embodiments with convenient further developments of the invention are indicated in the dependent claims.

According to the invention, in a method for detecting raindrops on a windscreen of a vehicle, at least one image is captured by the camera. An object extracted from the at least one image captured by the camera is identified as a raindrop, if a confidence value assigned to the extracted object is above a predetermined threshold value. The confidence value indicates the probability that the object in question is in fact a raindrop and not another object. In the present method the threshold value is modified in dependence of the presence of an item within the vehicle path. This is based on the finding that an item which is relatively near to the camera may lead to a misinterpretation of parts of the item as raindrops due to the characteristics of these parts in the image, which are similar to the characteristics of a raindrop in the image. By modifying the threshold value in case that an item is present within the vehicle path, a confusion of objects extracted from the image, which are non-drops with actual raindrops can be avoided at least to a large extent. Therefore modifying the threshold value leads to a more reliable detection of raindrops on the windscreen of the vehicle. The item does not necessarily need to be detected as such within the image. In some alternative, the detected item within vehicle path may even be outside the camera's field of view while usually close to it. In that case, the item can nevertheless affect raindrop detection due to some possible impediment coming from e.g. a light source at the item like back light of a leading vehicle scattering light within camera's field of view. Even if the light source is not within camera's field of view while the item being within vehicle path, some scattered light can be detected by the camera which may lead to some misinterpretation for raindrop detection.

In an advantageous embodiment of the invention the threshold value is increased, if the distance between the camera and the item is lower than a predetermined distance. This is due to the fact that an object which is far from the camera appears rather blurred when the camera is configured to detect raindrops on the windscreen. Consequently, when an object is rather close an image of that object is quite sharp. This may lead to confusion with raindrops on the windscreen, which also appear sharp in an image of the windscreen. By increasing the threshold value only objects extracted from the image, which yield a high probability of being a raindrop are actually identified as raindrops. By increasing the threshold value with the item being rather close to the camera false detections because of similar characteristics of parts of the item with raindrops can be avoided.

As the distance between the item and the camera depends on the position of the camera within the vehicle and on the size of the vehicle it is also possible to increase the threshold value, if the distance between the vehicle and the item is lower than a predetermined distance. Moreover, the distance between the vehicle and an item or obstacle can rather easily be determined, for example by parking assistance means.

With the threshold value modified in case an item is present within the camera's field of view, the raindrop can easily be identified if a contour and/or the contrast and/or an intensity of the extracted object is considered. Such characteristics of the objects extracted from the image are readily determinable and yield good detection results.

It has further turned out to be advantageous, when the presence of the item within the camera's field of view is determined by means of the camera. In this case no other detection means needs to be provided in order to determine the presence of the item or the distance between the item and the camera.

If at least two cameras are present, it is also possible to obtain data on the item with one camera and capturing the image for raindrop detection with the other camera. It is also possible to obtain data on the item with only one camera which is exclusively focused on the windscreen in order to detect raindrops on the windscreen.

Alternatively or additionally, the presence of the item within the vehicle path can be determined by a detection means configured to emit and receive a signal reflected by the item. Especially, if a vehicle is equipped with such a detection means, for example an ultrasonic detector and/or a radar detector, utilized for other driving assistance functions such as parking assistance, the data obtained by these detection means can easily be utilized in order to detect the presence of the item within the vehicle path allowing even the detection of item outside the camera's field of view still disturbing for raindrop detection.

In another advantageous embodiment of the invention the image is captured by a bifocal camera, wherein the raindrop detection is performed for objects extracted from the image area of a captured image, which is focused on the windscreen. Such a bifocal camera allows raindrop detection on one hand and another driving assistance functions based on the same captured image on the other hand. Furthermore, only one camera is thus needed for performing several driving assistance functions.

The presence of the item can easily be determined within another image area of the captured image, which is focused at infinity. With information obtained from this other image area with a focus different to the image area utilized for raindrop detection, the presence and/or the distance of the item within the field of view of the camera can easily be determined.

A supervised learning machine can be utilized to identify raindrops among objects extracted from the at least one image. Such a supervised learning machine, for example a support vector machine is particularly powerful in identifying raindrops.

Finally, it has turned out to be advantageous, if the threshold value is reset to a predetermined value, if the item is no longer present within the vehicle path or camera's field of view. With the disappearance of the item from the vehicle path, the probability of confusing parts of the item with raindrops actually present on the windscreen is no longer given, and there is no need for modifying the threshold value any longer.

It is also possible to interrupt the detection process for a period during which the item is present within the vehicle path or camera's field of view.

The camera assembly according to the invention, which is configured for detecting raindrops on a windscreen of a vehicle, comprises a camera for capturing at least one image. The camera assembly further comprises evaluation means configured to identify an object extracted from the at least one image captured by the camera as a raindrop, if the confidence value assigned to the extracted object is above a predetermined threshold value. The evaluation means is also configured to modify the threshold value in dependence of the presence of an item within the camera's field of view. Such a camera assembly is particularly reliable in detecting raindrops on the windscreen, as confusion of parts of the item with raindrops can be avoided by modifying the threshold value.

The preferred embodiments presented with respect to the method for detecting raindrops and the advantages thereof correspondingly apply to the camera assembly according to the invention and vice versa.

Further advantages, features and details of the invention are apparent from the claims, the following description of preferred embodiments as well as from the drawings. Therein show:
- Fig. 1: a first image taken by a bifocal camera installed within the cabin of a vehicle, wherein a lower part of the image is focused on the windscreen and contains objects which may be confused with raindrops on the windscreen,
- Fig. 2: another image of a similar situation, wherein the presence of a vehicle in front of the vehicle equipped with the bifocal camera may lead to a false detection of raindrops on the windscreen;
- Fig. 3: a flow chart indicating a method for detecting raindrops on the windscreen, wherein a threshold value defining a level of confidence for identifying an object as a raindrop is increased in case of the presence of an item in the camera's near field of view; and
- Fig. 4: very schematically a camera assembly configured to perform the detection of raindrops on the windscreen.

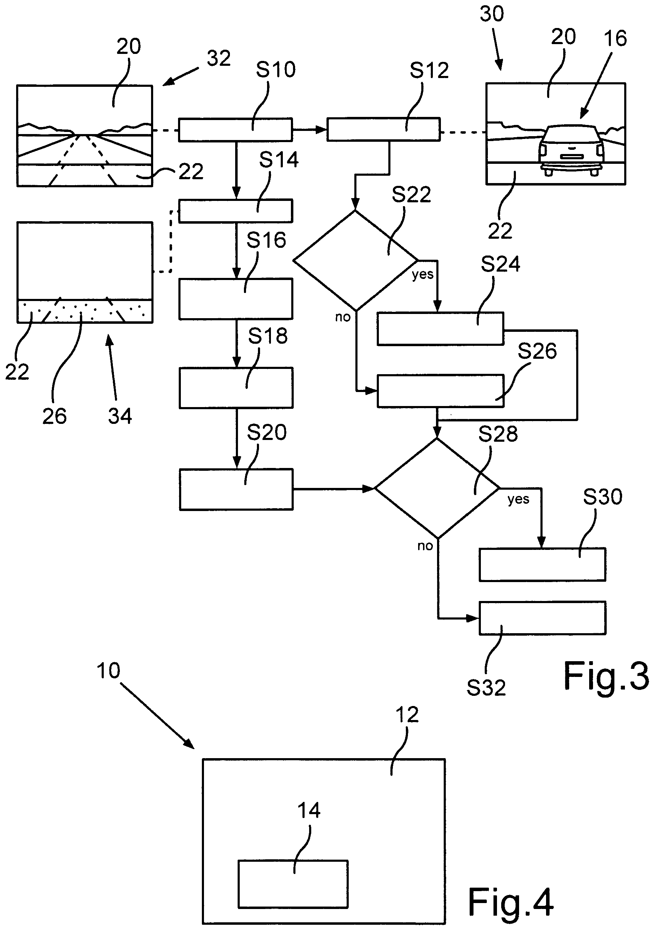

A camera assembly 10 (see Fig. 4) for detecting raindrops on a windscreen of vehicle comprises a camera 12 which may include a CMOS or a CCD image sensor and is configured to view the windscreen of the vehicle. The camera 12 is a bifocal camera which is focused on the windscreen of the vehicle and focused at infinity. Thus the camera 12 which is installed inside a cabin of the vehicle is configured to view objects on the windscreen of the vehicle.

The windscreen can be wiped with the aid of the wiper blades in case the camera assembly 10 detects raindrops on the windscreen. The camera 12 captures images of the windscreen and through image processing it is determined whether objects on the windscreen are raindrops or not.

The camera assembly 10 comprises evaluation means 14 (see Fig. 4) which are configured to identify an object extracted from the image captured by the camera 12 as a raindrop. For this evaluation a confidence value which is assigned to the extracted object is compared to a threshold value. The confidence value indicates the probability that an object within an image captured by the camera 12 is a raindrop. For example, after classification of the objects extracted from the image, to each object a confidence value is assigned that can vary between -100 and 100. In this case the value of 100 is the maximum confidence value or score for identifying the object as a raindrop. The value of - 100 is the minimum confidence value which leads to rejection of the object as a non-drop. If the threshold value is set to 0, each object with a confidence value above 0 is identified as a raindrop and each object with a negative confidence value is identified as a non-drop.

However, items or obstacles such as a vehicle 16 in front of the vehicle in which the camera assembly 10 is installed can lead to difficulties in detecting raindrops.

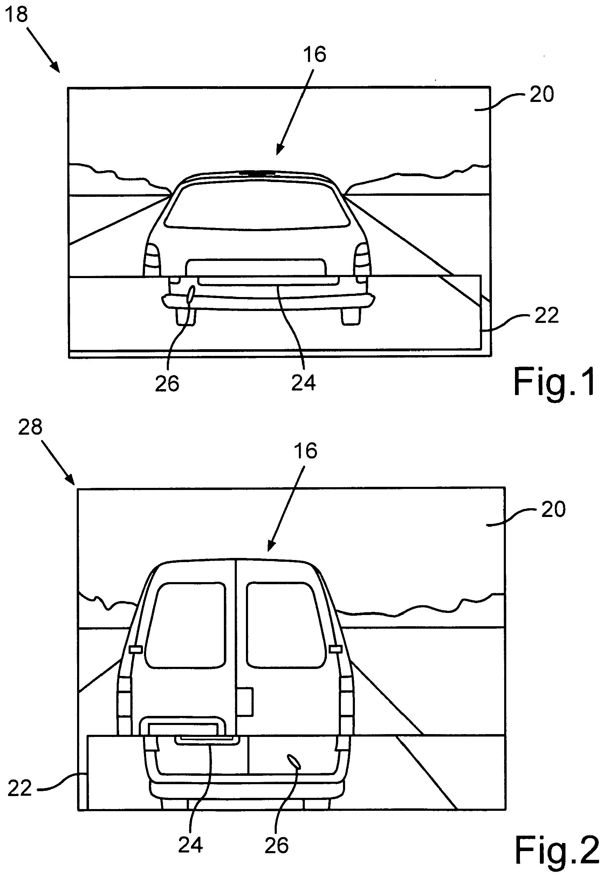

Fig. 1 shows an image 18 captured by the bifocal camera 12. An upper part 20 or image area of the captured image 18 is focused to infinity and the vehicle 16 in front of the vehicle is mainly situated in this upper part 20 of the image 18. A lower part 22 or lower image area of the image 18 is focused on the windscreen of the vehicle equipped with the camera assembly 10.

A part of the vehicle 16 in front of the vehicle equipped with the camera 12 comes to lie within the lower part 22 of the image 18. Parts 24 of that vehicle 16 such as parts of the bumper or tail lamps of this vehicle 16 are rather close to the vehicle equipped with the camera 12. Therefore, these parts 24 which are located within the camera's 12 field of view appear as rather sharp objects within the lower part 22 of the image 18. Similarly raindrops 26 within the lower part 22 of the image 18 also have a sharp contour as a feature which usually leads to the identification of such extracted objects as raindrops 26.

As a part 24 of the vehicle 16 such as a tail lamp may appear similar to a raindrop 26, it becomes difficult to distinguish these objects in the image 18, whenever an item such as the vehicle 16 is present within the field of view of the camera 12, especially when the item or vehicle 16 is rather close. Contrasted and sharp characteristics of these parts 24 of the vehicle 16 in the lower part 22 of the image 18 may lead to confusing them with raindrops 26. Also, a raindrop on the windscreen, which is enlightened by the close vehicle's 16 tail lamp may display characteristics similar to a tail lamp, for example a high intensity and a dominance of red component within the object extracted from the lower part 22 of the image 18.

Fig. 2 shows another example of an image 28 with a vehicle 16 close to the front of the vehicle equipped with the camera assembly 10. Here again parts 24 of vehicle 16 appear similar to raindrops 26 due to the short distance between the vehicle equipped with the camera assembly 10 and the vehicle 16 in front of the latter.

The presence of a vehicle 16 in the near field of the view of the camera 12 may induce difficulties in detecting raindrops 26. Therefore the threshold value to which the confidence value assigned to an object extracted from the lower part 22 of a captured image 30, 32, 34 is compared, is modified as will be explained with reference to Fig. 3.

In a first step S10 the bifocal camera 12 captures an image 30, 32, 34 in which the upper part 20 is focused at infinity and the lower part 22 is focused on the windscreen. From this dual focus image 30, 32, 34 the upper part 20 is analyzed for obstacle detection in a step S12. This detection of the obstacle or item such as the vehicle 16 can be performed by processing the upper part 20 of the image 30. Alternatively or additionally a detector like a ultrasonic detector and/or a radar detector can be utilized to detect the presence of the vehicle 16 in front of the vehicle equipped with the camera assembly 10.

In a step S14 objects are extracted from the lower part 22 of the captured image 30, 32, 34. In a next step S16 the extracted objects are labelled. This classification or labelization of the objects within the lower part 22 of the captured image 30, 32, 34 is based on a set of descriptors which may describe object shape, intensity, texture, contrast or the like. Based on the descriptors, a selection of objects is performed in a step S18. This selection leads to a list of potential raindrops 26 within the lower part 22 of the captured image 30, 32, 34. In establishing this list of potential raindrops a confidence value or score is assigned to each potential raindrop in a step S20.

After detection of an item such as the vehicle 16 within the upper part 20 of the captured image 30 the distance of the vehicle 16 from the camera 12 is determined in a step S22. For example, if the vehicle 16 is closer than 5 meters, especially at a distance of 3 - 4 meters from the camera 12, the threshold value with which the confidence value is compared is increased. On the contrary, if vehicle 16 is relatively far from the camera's 12 field of view, for example at a distance of more than four meters, in a step S24 a standard threshold value is utilized for comparison with the confidence value. For the example with confidence values between -100 and 100, the threshold value selected in step S24 may be 0. On the other hand, if the vehicle 16 is not far but close to the camera 12, an increased threshold value is utilized for comparison with the confidence value in step S26. For a vehicle 16 at a distance between 3 and 4 meters from the camera 12 the increased threshold value selected in step S26 can have a value of 50, if the confidence value can vary between -100 and 100.

In a step S28 it is determined whether the confidence value is above the threshold value selected in step S24 or step S26 respectively. If this is the case, in a step S30 the object extracted from the lower part 22 of the captured image 30, 32, 34 is identified as a raindrop. If not, in a step S32 the object is rejected, i.e. the extracted object is identified as a non-drop.

Depending on the number and size of raindrops 26 on the windscreen, the wiper blades may be switched on or driving assistance systems can be activated such as a braking assistance system and/or the switching on of headlights of the vehicle equipped with the camera assembly 10. Additionally or alternatively the driver can be alerted that rainy conditions are present.

As in case of the presence of a vehicle 16 or such an item closely in front of the camera 12 the threshold value is modified, a higher confidence is necessary in order to identify an object extracted from the lower part 22 of the image as a raindrop 26. Alternatively the raindrop 26 detection process can be interrupted during the period of the presence of the vehicle 16 or such an obstacle or item in front of the vehicle equipped with a camera 12. As soon as the vehicle 16 is far enough away from the vehicle equipped with the camera 12, the raindrop detection utilizing the lower, standard threshold value can be resumed.

## Claims

1. A method for detecting raindrops (26) on a windscreen of a vehicle, in which at least one image (18, 28, 30, 32, 34) is captured by a camera (12),
**characterized in that**:
a presence of an item (16) in front of the vehicle is detected (S12);
objects are extracted (S14) from the at least one image (18, 28, 30, 32, 34); an object extracted from the at least one image (18, 28, 30, 32, 34) captured by the camera (12) is identified as a raindrop (26), if a confidence value assigned (S20) to the extracted object is above a predetermined threshold value, the assignment being performed by classifying or labelling the extracted objects based on a set of descriptors leading to a list of potential raindrops and by assigning a confidence value to each potential raindrop (S20), wherein the threshold value is modified (S22) in dependence of the detected presence of an item (16);
and wherein the set of descriptors describes contour and/or contrast and/or intensity of the extracted object, and the image (18, 28, 30, 32, 34) is captured by a bifocal camera (12), wherein the raindrop (26) detection is performed for objects extracted from an image area (22) of the captured image (18, 28, 30, 32, 34), which is focused on the windscreen.

2. The method according to claim 1,
**characterized in that**
the threshold value is modified (S22) in dependence of the presence of an item (16) within the camera's (12) field of view.

3. The method according to claim 1 or 2,
**characterized in that**
the threshold value is increased (S26), if a distance between the camera (12) and the item (16) and/or between the vehicle and the item (16) is lower than a predetermined distance.

4. The method according to claim 2,
**characterized in that**
the presence of the item (16) within the camera's field of view is determined by means of the camera (12).

5. The method according to any one of claims 1 to 4,
**characterized in that**
the presence of the item (16) within the vehicle path is determined by a detection means configured to emit and receive a signal reflected by the item (16).

6. The method according to any one of claims 1 to 5,
**characterized in that**
the presence of the item (16) is determined within another image area (20) of the captured image (18, 28, 30, 32, 34), which is focused at infinity.

7. The method according to any one of claims 1 to 6,
**characterized in that**
a supervised learning machine is utilized to identify raindrops (26) among objects extracted from the at least one image (18, 28, 30, 32, 34).

8. The method according to any one of claims 1 to 7,
**characterized in that**
the threshold value is reset to a predetermined value, if the item (16) is no longer present within the vehicle path.

9. A camera assembly for detecting raindrops (26) on a windscreen of a vehicle, comprising a camera (12) for capturing at least one image (18, 28, 30, 32, 34), **characterized in that** said camera (12) is a bifocal camera (12), and **in that** the camera assembly comprises evaluation means (14) configured to:
- detect a presence of an item (16) in front of the vehicle (S12);
- extract objects (S14) from the at least one image (18, 28, 30, 32, 34);
- identify an object extracted from the at least one image (18, 28, 30, 32, 34) captured by the camera (12) as a raindrop (26), if a confidence value assigned (S20) to the extracted object is above a predetermined threshold value, the assignment being performed by classifying or labelling the extracted objects based on a set of descriptors leading to a list of potential raindrops and by assigning a confidence value to each potential raindrop (S20), wherein the set of descriptors describes contour and/or contrast and/or intensity of the extracted object;
- modify (S22) the threshold value in dependence of the detected presence of an item (16); and
- perform the raindrop (26) detection for objects extracted from an image area (22) of the captured image (18, 28, 30, 32, 34), which is focused on the windscreen.

## Patentansprüche

1. Verfahren zum Erfassen von Regentropfen (26) auf einer Windschutzscheibe eines Fahrzeugs, bei dem mindestens ein Bild (18, 28, 30, 32, 34) durch eine Kamera (12) aufgenommen wird, **dadurch gekennzeichnet, dass**:
ein Vorhandensein eines Gegenstands (16) vor dem Fahrzeug erfasst wird (S12);
Objekte aus dem mindestens einen Bild (18, 28, 30, 32, 34) extrahiert werden (S14);
ein Objekt, das aus dem mindestens einen durch die Kamera (12) aufgenommenen Bild (18, 28, 30, 32, 34) extrahiert wird, als ein Regentropfen (26) identifiziert wird, falls ein Konfidenzwert, der dem extrahierten Objekt zugewiesen wird (S20), über einem vorbestimmten Schwellenwert liegt, wobei die Zuweisung durch Klassifizieren oder Kennzeichnen der extrahierten Objekte basierend auf einem Satz von Deskriptoren, was zu einer Liste von potenziellen Regentropfen führt, und durch Zuweisen eines Konfidenzwerts zu jedem potenziellen Regentropfen (S20) durchgeführt wird, wobei der Schwellenwert in Abhängigkeit vom erfassten Vorhandensein eines Gegenstands (16) modifiziert wird (S22);
und wobei der Satz von Deskriptoren eine Kontur und/oder einen Kontrast und/oder eine Intensität des extrahierten Objekts beschreibt und
das Bild (18, 28, 30, 32, 34) durch eine Bifokalkamera (12) aufgenommen wird, wobei die Erfassung der Regentropfen (26) für Objekte durchgeführt wird, die aus einem Bildbereich (22) des aufgenommenen Bildes (18, 28, 30, 32, 34), der auf die Windschutzscheibe fokussiert ist, extrahiert werden.

2. Verfahren nach Anspruch 1, **dadurch gekennzeichnet, dass**
der Schwellenwert in Abhängigkeit vom Vorhandensein eines Gegenstands (16) im Sichtfeld der Kamera (12) modifiziert wird (S22).

3. Verfahren nach Anspruch 1 oder 2, **dadurch gekennzeichnet, dass**
der Schwellenwert erhöht wird (S26), falls ein Abstand zwischen der Kamera (12) und dem Gegenstand (16) und/oder zwischen dem Fahrzeug und dem Gegenstand (16) geringer als ein vorbestimmter Abstand ist.

4. Verfahren nach Anspruch 2, **dadurch gekennzeichnet, dass**
das Vorhandensein des Gegenstands (16) im Sichtfeld der Kamera mittels der Kamera (12) bestimmt wird.

5. Verfahren nach einem der Ansprüche 1 bis 4, **dadurch gekennzeichnet, dass**
das Vorhandensein des Gegenstands (16) im Fahrzeugweg durch ein Erfassungsmittel, das zum Emittieren und Empfangen eines durch den Gegenstand (16) reflektierten Signals konfiguriert ist, bestimmt wird.

6. Verfahren nach einem der Ansprüche 1 bis 5, **dadurch gekennzeichnet, dass**
das Vorhandensein des Gegenstands (16) in einem anderen Bildbereich (20) des aufgenommenen Bildes (18, 28, 30, 32, 34), der auf Unendlich fokussiert ist, bestimmt wird.

7. Verfahren nach einem der Ansprüche 1 bis 6, **dadurch gekennzeichnet, dass**
eine kontrollierte Lernmaschine zum Identifizieren von Regentropfen (26) unter Objekten, die aus dem mindestens einen Bild (18, 28, 30, 32, 34) extrahiert werden, benutzt wird.

8. Verfahren nach einem der Ansprüche 1 bis 7, **dadurch gekennzeichnet, dass**
der Schwellenwert zu einem vorbestimmten Wert zurückgesetzt wird, falls der Gegenstand (16) nicht länger im Fahrzeugweg vorhanden ist.

9. Kameraanordnung zum Erfassen von Regentropfen (26) auf einer Windschutzscheibe eines Fahrzeugs, die eine Kamera (12) zum Aufnehmen von mindestens einem Bild (18, 28, 30, 32, 34) umfasst, **dadurch gekennzeichnet, dass** die Kamera (12) eine Bifokalkamera (12) ist und dass die Kameraanordnung Evaluierungsmittel (14) umfasst, die zu Folgendem konfiguriert sind:
- Erfassen eines Vorhandenseins eines Gegenstands (16) vor dem Fahrzeug (S12);
- Extrahieren von Objekten (S14) aus dem mindestens einen Bild (18, 28, 30, 32, 34);
- Identifizieren eines Objekts, das aus dem mindestens einen durch die Kamera (12) aufgenommenen Bild (18, 28, 30, 32, 34) extrahiert wird, als ein Regentropfen (26), falls ein Konfidenzwert, der dem extrahierten Objekt zugewiesen wird (S20), über einem vorbestimmten Schwellenwert liegt, wobei die Zuweisung durch Klassifizieren oder Kennzeichnen der extrahierten Objekte basierend auf einem Satz von Deskriptoren, was zu einer Liste von potenziellen Regentropfen führt, und durch Zuweisen eines Konfidenzwerts zu jedem potenziellen Regentropfen (S20) durchgeführt wird, wobei der Satz von Deskriptoren eine Kontur und/oder einen Kontrast und/oder eine Intensität des extrahierten Objekts beschreibt;
- Modifizieren (S22) des Schwellenwerts in Abhängigkeit vom erfassten Vorhandensein eines Gegenstands (16) und
- Durchführen der Erfassung von Regentropfen (26) für Objekte, die aus einem Bildbereich (22) des aufgenommenen Bildes (18, 28, 30, 32, 34), der auf die Windschutzscheibe fokussiert ist, extrahiert werden.

## Revendications

1. Procédé de détection de gouttes de pluie (26) sur un pare-brise d'un véhicule, dans lequel au moins une image (18, 28, 30, 32, 34) est capturée par une caméra (12),
**caractérisé en ce que** :
une présence d'un élément (16) devant le véhicule est détectée (S12) ;
des objets sont extraits (S14) de l'au moins une image (18, 28, 30, 32, 34) ;
un objet extrait de l'au moins une image (18, 28, 30, 32, 34) capturée par la caméra (12) est identifié comme une goutte de pluie (26) si une valeur de confiance attribuée (S20) à l'objet extrait est supérieure à une valeur seuil prédéterminée, l'attribution étant effectuée par classement ou marquage des objets extraits sur la base d'un ensemble de descripteurs conduisant à une liste de gouttes de pluie potentielles et par attribution d'une valeur de confiance à chaque goutte de pluie potentielle (S20), la valeur seuil étant modifiée (S22) en fonction de la présence détectée d'un élément (16), et l'ensemble de descripteurs décrivant le contour et/ou le contraste et/ou l'intensité de l'objet extrait ; et
l'image (18, 28, 30, 32, 34) est capturée par une caméra bifocale (12), la détection de gouttes de pluie (26) étant effectuée pour des objets extraits d'une zone d'image (22) de l'image capturée (18, 28, 30, 32, 34) qui est mise au point sur le pare-brise.

2. Procédé selon la revendication 1,
**caractérisé en ce que**
la valeur seuil est modifiée (S22) en fonction de la présence d'un élément (16) à l'intérieur du champ de vision de la caméra (12).

3. Procédé selon la revendication 1 ou 2,
**caractérisé en ce que**
la valeur seuil est augmentée (S26) si une distance entre la caméra (12) et l'élément (16) et/ou entre le véhicule et l'élément (16) est inférieure à une distance prédéterminée.

4. Procédé selon la revendication 2,
**caractérisé en ce que**
la présence de l'élément (16) à l'intérieur du champ de vision de la caméra est déterminée au moyen de la caméra (12).

5. Procédé selon l'une quelconque des revendications 1 à 4,
**caractérisé en ce que**
la présence de l'élément (16) sur la trajectoire du véhicule est déterminée par un moyen de détection configuré pour émettre et recevoir un signal réfléchi par l'élément (16).

6. Procédé selon l'une quelconque des revendications 1 à 5,
**caractérisé en ce que**
la présence de l'élément (16) est déterminée à l'intérieur d'une autre zone d'image (20) de l'image capturée (18, 28, 30, 32, 34) qui est mise au point à l'infini.

7. Procédé selon l'une quelconque des revendications 1 à 6,
**caractérisé en ce que**
une machine d'apprentissage supervisé est utilisée pour identifier des gouttes de pluie (26) parmi des objets extraits de l'au moins une image (18, 28, 30, 32, 34).

8. Procédé selon l'une quelconque des revendications 1 à 7,
**caractérisé en ce que**
la valeur seuil est réinitialisée à une valeur prédéterminée si l'élément (16) n'est plus présent sur la trajectoire du véhicule.

9. Ensemble caméra destiné à détecter des gouttes de pluie (26) sur un pare-brise d'un véhicule, comprenant une caméra (12) pour capturer au moins une image (18, 28, 30, 32, 34),
**caractérisé en ce que** ladite caméra (12) est une caméra bifocale (12), et **en ce que** l'ensemble caméra comprend un moyen d'évaluation (14) configuré pour :
- détecter une présence d'un élément (16) devant le véhicule (S12) ;
- extraire des objets (S14) de l'au moins une image (18, 28, 30, 32, 34) ;
- identifier un objet extrait de l'au moins une image (18, 28, 30, 32, 34) capturée par la caméra (12) comme une goutte de pluie (26) si une valeur de confiance attribuée (S20) à l'objet extrait est supérieure à une valeur seuil prédéterminée, l'attribution étant effectuée par classement ou marquage des objets extraits sur la base d'un ensemble de descripteurs conduisant à une liste de gouttes de pluie potentielles et par attribution d'une valeur de confiance à chaque goutte de pluie potentielle (S20), l'ensemble de descripteurs décrivant le contour et/ou le contraste et/ou l'intensité de l'objet extrait ;
- modifier (S22) la valeur seuil en fonction de la présence détectée d'un élément (16) ; et
- effectuer la détection de gouttes de pluie (26) pour des objets extraits d'une zone d'image (22) de l'image capturée (18, 28, 30, 32, 34) qui est mise au point sur le pare-brise.
